**Europäisches Patentamt**

**European Patent Office**

**Office européen des brevets**

(11) Numéro de publication: **0 409 678 A1**

# DEMANDE DE BREVET EUROPEEN

(21) Numéro de dépôt: **90401796.9**

(22) Date de dépôt: **25.06.90**

(51) Int. Cl.5: **C08G 69/44**

(30) Priorité: **04.07.89 FR 8908951**

(43) Date de publication de la demande:
**23.01.91 Bulletin 91/04**

(84) Etats contractants désignés:
**AT BE CH DE DK ES FR GB GR IT LI LU NL SE**

(71) Demandeur: **ATOCHEM**
**4 & 8, Cours Michelet La Défense 10 10**
**F-92800 Puteaux(FR)**

(72) Inventeur: **Glotin, Michel**
**Domaine de Maubuisson**
**F-27470 Serquigny(FR)**
Inventeur: **Rault, Jacques**
**26 rue Borgnis-Desbordes**
**F-78000 Versailles(FR)**
Inventeur: **Okoroafor, Emmanuel**
**5 Avenue du Maréchal de Lattre de Tassigny**
**F-92210 Saint Cloud(FR)**

(54) **Elastomère thermoplastique cryo-extensible, son procédé de préparation.**

(57) La présente invention concerne des élastomères thermoplastiques cryo-extensibles. Ils sont obtenus par étirage notamment à température ambiante. Après relaxation et refroidissement à basse température, ils présentent un allongement réversible dans le sens d'étirement.

EP 0 409 678 A1

# ELASTOMERE THERMOPLASTIQUE CRYO-EXTENSIBLE, SON PROCEDE DE PREPARATION

La présente invention a pour objet des élastomères thermoplastiques cryo-extensibles, c'est-à-dire qui présentent une dilatation macroscopique au refroidissement après étirage.

Les phénomènes de dilatation à basse température ont été observés pour des caoutchoucs étirés (W.H. SMITH, C.P. SAYLOR, Bur. Stand. J. Research, 21 , 257(1938)), pour du polyéthylène réticulé et étiré (M.J. MACHIN, A. KELLER, J. Macromol. Sci., (Phys.) $\overline{B1}$(1), 41(1967).

L'invention concerne en premier lieu des élastomères thermoplastiques dont la caractéristique est d'être cryo-extensibles.

Elle concerne plus particulièrement des élastomères thermoplastiques cryo-extensibles constitués par des copolymères blocs ou multiséquencés qui comportent des séquences souples cristallisables.

Par séquences souples cristallisables, on entend des séquences ou blocs qui ne sont pas cristallisés à température ambiante ou dont le taux de cristallinité est inférieur ou égal à approximativement 0,5 fois celui des homopolymères de même nature chimique et de même masse moléculaire que lesdites séquences, refroidis dans les mêmes conditions de l'état fondu jusqu'à la température ambiante à une vitesse d'environ 10° C/mn.

Ces séquences souples sont cristallisables par étirage et/ou à basse température.

Dans la présente demande, la température ambiante correspond à une gamme de température ccmprise entre 15 et 40° C, et en général proche de 20° C.

Par étirage, on entend une contrainte uniaxiale ou traction appliquée à un échantillon qui provoque un allongement de ce dernier dans la direction de l'étirement.

L'expression "refroidissement à basse température" signifie que l'on porte l'échantillon à une température infé rieure à la température ambiante, en général comprise entre 20 et -100° C et de préférence entre 20 et -40° C.

Les séquences souples cristallisables des élastomères thermoplastiques selon l'invention sont essentiellement constituées de polyéther et/ou de polyester, de préférence de haut poids moléculaire ( $\overline{Mn} \geq$ 1000 et de préférence $\overline{Mn} \geq$ 2000).

Outre les séquences souples cristallisables, ces élastomères thermoplastiques contiennent des séquences ou blocs rigides, à caractère thermoplastique en alternance avec les séquences souples qui constituent des noeuds de réticulation physique réversible thermiquement.

Les séquences rigides des élastomères thermoplastiques cryo-extensibles peuvent être, à base de polyuréthanne de polyester et/ou de polyamide.

Il est important que la ségrégation entre les séquences souples et les séquences rigides soit suffisante pour permettre la cristallisation des séquences souples autrement dit que les défauts de structure liés à la copolymérisation des différentes séquences n'empêchent la cristallisation des séquences souples cristallisables.

Dans le cas d'un élastomère thermoplastique dont les séquences rigides sont cristallines, telles que des séquences polyamide ou polyester, il est souhaitable que l'écart entre la température de fusion de séquences rigides au sein du copolymère et la température de fusion de ces mêmes séquences avant copolymérisation ne soit pas supérieur à environ 10° C et de préférence à 5° C.

L'allongement à basse température ou cryo-extensibilité des élastomères thermoplastiques conformes à l'invention et étirés uniaxialement peut atteindre 20 % de la dimension suivant l'axe d'étirement après étirage et relaxation.

La cryo-extensibilité est réversible c'est-à-dire que lorsque l'élastomère thermoplastique est ramené à température ambiante, il reprend ses dimensions rémanentes, c'est-à-dire celles qu'il avait après étirage et relaxation (et/ou recuit) et avant refroidissement.

Cette réversibilité est reproductible : chaque fois que l'élastomère thermoplastique sera refroidi, il s'allongera et ramené à température ambiante, il reprendra ses dimensions rémanentes.

A titre d'exemple d'élastomères thermoplastiques, on peut citer :

- les copolymères blocs à base polyuréthanne qui peuvent être obtenus par réaction conjointe d'un diol de haute masse moléculaire qui constitue la séquence souple cristallisable de l'élastomère, sur un diisocyanate et un diol de basse masse moléculaire qui engendrent la séquence rigide.

- les copolymères blocs à base polyester tels que ceux obtenus par copolymérisation d'un polybutylène (PBT) ou d'un polyéthylènetéréphtalate (PET) qui constitue les séquences rigides et cristallines et d'un glycol de bas poids moléculaire (butane diol, diéthylène glycol) qui, associé à un poly alkylène éther) glycol forme la séquence souple cristallisable.

- les copolymères blocs à base de polyamide dont les séquences rigides sont constituées de polyamide et

2

les séquences souples cristallisables de polyéther, appelés aussi polyétheramides.

Ces polyétheramides séquencés peuvent notamment résulter de la copolycondensation de séquences polyamides à extrémités réactives avec des séquences polyéthers à extrémités réactives, telles que, entre autre :

a) Séquences polyamides à bouts de chaînes diamines avec des séquences polyoxyalkylènes à bouts de chaînes dicarboxyliques.

b) Séquences polyamides à bouts de chaînes dicarboxyliques avec des séquences polyoxyalkylènes à bouts de chaînes diamines obtenues par cyanoéthylation et hydrogénation de séquences polyoxyalkylènes alphaoméga dihydroxylées aliphatiques appelées polyétherdiols.

c) Séquences polyamides à bouts de chaînes dicarboxyliques avec des polyétherdiols, les polyétheramides obtenus étant, dans ce cas particulier, des polyétheresteramides, particulièrement préférés par la demanderesse.

La composition et la fabrication de tels polyétheresteramides ont été décrites dans les brevets français n° 74.18913 et 77.26678 au nom de la demanderesse et dont le contenu s'ajoute à la présente description.

La masse moléculaire moyenne en nombre de ces séquences polyamide est généralement comprise entre 500 et 10 000 et plus particulièrement entre 600 et 5 000. Les séquences polyamide des polyétheresteramides sont formées de préférence de polyamide 6, 6.6, 6.12, 11 ou 12 et/ou de polyamide amorphe. ou de copolyamide résultant de la polycondensation de leurs monomères

La masse moléculaire moyenne en nombre des polyéthers est comprise généralement entre 1 000 et 10 000 et de préférence supérieure à 2 000.

Les séquences polyéther consistent de préférence essentiellement en polytétraméthylène glycol (PTMG). Outre du PTMG, elles peuvent par exemple contenir du polyéthylène glycol (PEG) et/ou du polypropylène glycol (PPG).

La viscosité inhérente des polyétheresteramides est avantageusement comprise entre 0,8 et 2,05. Elle est mesurée dans le métacrésol à 20°C avec une concentration initiale de 0,5 g de polymère pour 100 g de métacrésol

Les polyétheresteramides peuvent être formés de 10 à 85 % en poids de polyéther, et de 90 à 15 % en poids de polyamide, et de préférence de 30 à 80 % en poids de polyéther et de 70 à 20 % en poids de polyamide.

Les polyétheresteramides préférés par la demanderesse sont ceux dont les séquences polyamide dérivent de polyamide -12 et dont les séquences polyéther dérivent de PTMG.

L'invention concerne également un procédé de préparation des élastomères thermoplastiques cryo-extensibles tels que définis précédemment.

Selon ce procédé, on soumet l'échantillon d'élastomère thermoplastique à une traction uniaxiale entraînant une déformation inférieure à celle conduisant à la rupture de l'échantillon à l'aide, par exemple d'un dynamomètre.

On opère en général à une température comprise entre 20 et 120°C et de préférence entre 20 et 70°C.

La vitesse d'étirage est en général comprise entre 1 et 500 mm/mn.

L'étirement initial E de l'échantillon est égal au rapport :

$$E = \frac{\text{longueur de l'ECH. après étirage - longueur initiale}}{\text{longueur initiale}} \times 100$$

ces deux longueurs étant mesurées selon le sens d'étirage.

Il peut atteindre 1 000 % mais est de préférence compris entre 100 et 400 %.

Lorsque l'échantillon est fortement étiré (étirement ≥ 400 %), on cristallise les séquences souples pendant l'étirage ce qui a pour effet de diminuer significativement l'importance de la cryo-extensibilité.

Cependant on peut également éviter la cristallisation sous étirage en étirant à température élevée (≥ 70°C) et/ou en pratiquant un recuit de l'échantillon pendant la relaxation à une température supérieure à la température de fusion des séquences souples cristallisables.

A titre d'exemple, pour les séquences polyéther à base de PTMG, on pratique le recuit à 60°C environ.

Une fois l'échantillon étiré, il est relaxé pendant au moins 1 mn et de préférence au moins 5 mn à une température en général comprise entre 20 et 120°C, et de préférence à température ambiante.

L'allongement rémanent Er est égal au rapport :

$$Er = \frac{\left(\begin{array}{c}\text{longueur de l'ECH. après}\\ \text{étirage et relaxation}\end{array}\right) - \left(\text{longueur initiale}\right)}{\text{longueur initiale}} \times 100$$

ces deux longueurs étant mesurées selon le sens d'étirage,

L'allongement rémanent est en général inférieur à l'étirement initial, et ce, quel que soit la valeur de cet étirement initial. Il augmente avec l'intensité de l'étirement initial et également lorsque la proportion des séquences rigides au sein de l'élastomère thermoplastiques augmente.

On refroidit ensuite l'échantillon à basse température. On peut opérer de façon progressive ou très rapidement en pratiquant une sorte de trempe.

On ne constate alors un allongement de l'échantillon, que dans la direction d'étirage.

L'ordre de grandeur de ce cryo-allongement peut atteindre 20 % de sa dimension rémanente.

Les élastomères thermoplastiques conformes à l'invention peuvent être utilisés dans de nombreuses applications, sous forme notamment d'objets moulés, extrudés et/ou injectés, de films... dans des domaines de température où se produit la cryo-extensibilité.

A titre d'exemple d'application, on peut citer des joints d'étanchéité utilisés à basse température : ils sont moulés, étirés, relaxés et installés à température ambiante.

En choisissant judicieusement l'étirement initial, on pourra obtenir un cryo-allongement dudit joint assurant une parfaite étanchéité de la liaison.

Les exemples suivants illustrent l'invention sans toutefois la limiter :

EXEMPLE 1

On découpe des éprouvettes en forme d'haltère conformément à la norme ASTM D638 type 4 dans des plaques de divers échantillons de polyétheresteramide dont les séquences souples cristallisables sont constituées de PTMG et les séquences rigides de polyamide-12.

Le Tableau I ci-dessous indique les masses moléculaires moyennes en nombre des séquences souples et rigides des échantillons étudiés et la quantité de PA-12 en poids dans l'échantillon.

TABLEAU I

| N° ECHAN. | $\overline{Mn}$ PTMG | $\overline{Mn}$ PA-12 | % de PA-12 dans le copolymère en poids |
|-----------|------|-------|------------------------------------------|
| A | 2 000 | 600 | 23 |
| B | 2 000 | 850 | 29,8 |
| C | 2 900 | 850 | 22,7 |
| D | 2 900 | 1 200 | 29,3 |

Les éprouvettes des ECHANTILLONS A à D sont étirées unixialement conformément à la norme D638 à température ambiante.

On fait subir aux ECHANTILLONS un étirement initial E compris entre 100 et 500 % et on mesure l'allongement rémanent Er après relaxation à température ambiante pendant 5 mn.

Les résultats des mesures sont réunis dans le Tableau II.

TABLEAU II

| Etirement initial E (%) | Allongement rémanent Er (%) de l'ECH. N° | | | |
|---|---|---|---|---|
| | A | B | C | D |
| 100 | 7 | 13 | 11 | 20 |
| 300 | 90 | 132 | 107 | 147 |
| 500 | 221 | 265 | 250 | 300 |

On refroidit les éprouvettes étirées puis relaxées de la température ambiante jusqu'à -40°C, la vitesse de refroidissement étant égale à 10°C/mn.

On mesure la variation de longeur $\delta(L)$ dans le sens d'étirage en fonction de la température et pour différentes valeurs de l'étirage préalable (comprises entre 0 et 700 %).

$\delta(L)$ est égal à la différence entre la longueur de l'échantillon à la température de refroidissement T et la longueur de l'échantillon à température ambiante après étirage et relaxation.

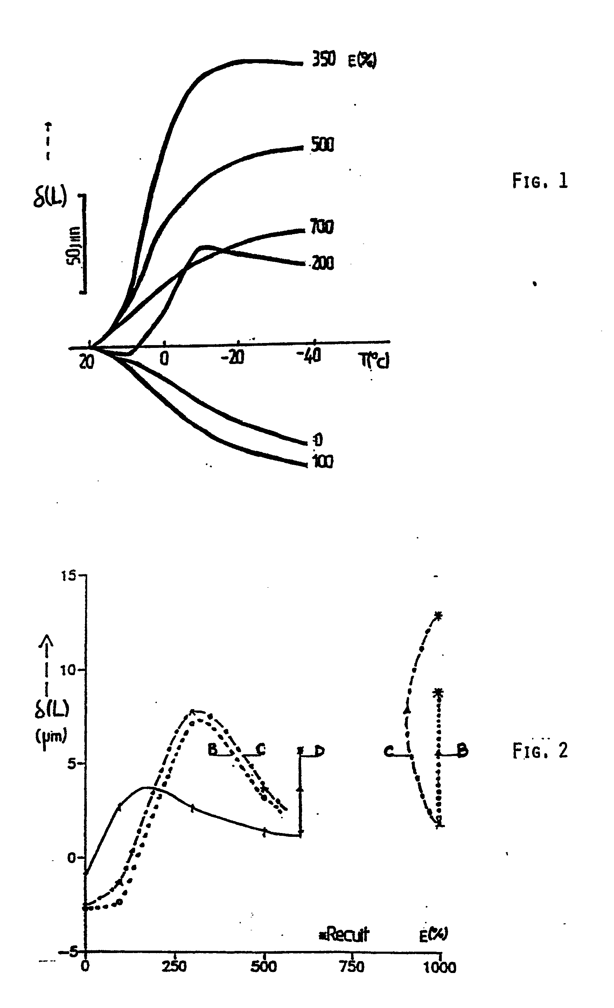

La Figure 1 reprend les courbes de variation de longueur $\delta(L)$ pour un étirement initial donné.

On note que pour un étirement initial inférieur à 100 % , il y a contraction de l'échantillon ($\delta(L) \leq 0$).

On note également que le maximum d'augmentation de longueur $\delta(L)$, quel que soit l'étirement initial appliqué ($\geq$ 100 %) se produit à une température d'environ -10°C. Et le maximum d'augmentation de longueur $\delta(L)$ correspond à un étirement initial de l'ordre de 350 %.

On détermine également pour chaque échantillon étiré le cryo-allongement X entre 20°C et -40°C et selon l'axe d'étirement :

$$X = \frac{\text{longueur à } -40°C - \text{longueur à } 20°C}{\text{longueur à } 20°C} \times 100$$

la longueur à 20°C correspondant à la longueur après étirage et relaxation à température ambiante.

On remarque que pour le polyétherester amide de l'ECHANTILLON A il n'y a pas de cryo-allongement pour un étirement initial inférieur à 100 %.

Les résultats sont exprimés dans le Tableau III ci-dessous.

TABLEAU III

| E (%) | X (%) |
|---|---|
| 0 | -2,12 |
| 100 | -2,56 |
| 200 | 1,67 |
| 350 | 5,82 |
| 500 | 3,9 |
| 700 | 2,22 |

EXEMPLE 2

On reprend les échantillons B, C, D que l'on étire et relaxe comme indiqué dans l'exemple 1.

Puis on refroidit chaque échantillon étiré de 20°C à -40°C également dans les mêmes conditions que celles décrites dans l'exemple 1.

On mesure δ(L) et on détermine X tel que défini dans l'exemple 1 en fonction de l'étirement initial E. Les courbes de X en fonction de l'étirement initial E sont tracées dans la figure 2.

**Revendications**

1. Elastomère thermoplastique, caractérisé en ce qu'il est cryo-extensible de façon réversible et reproductible.

2. Elastomère thermoplastique selon la revendication 1, caractérisé en ce qu'il est multiséquencé et comprend des séquences rigides et des séquences souples cristallisables.

3. Elastomère thermoplastique selon la revendication 1, caractérisé en ce que la masse moléculaire moyenne en nombre de séquences souples cristallisables est supérieure ou égale à 1 000, et de préférence supérieure ou égale à 2 000.

4. Elastomère thermoplastique selon l'une quelconque des revendications 2 ou 3, caractérisé en ce que les séquences souples cristallisables sont à base de polyéther et/ou de polyester et de préférence à base de polytétraméthylène glycol.

5. Elastomère thermoplastique selon l'une quelconque des revendications 2 à 4, caractérisé en ce que les séquences rigides sont à base de polyuréthanne, de polyester et/ou de polyamide.

6. Elastomère thermoplastique selon l'une quelconque des revendications 2 à 5, caractérisé en ce qu'il est de type polyétheresteramide, avec de préférence des séquences rigides à base de (co)polyamide ou de mélange de polyamide(s) aliphatique(s) et des séquences souples cristallisables constituées essentiellement de polytétraméthylène glycol.

7. Procédé de fabrication d'un élastomère thermoplastique tel que défini dans l'une quelconque des revendications 1 à 6, caractérisé par les étapes suivantes :
   a) on étire uniaxialement à température ambiante ledit élastomère ;
   b) on le relaxe soit à température ambiante, soit en pratiquant un recuit ;
   c) on refroidit l'élastomère thermoplastique à basse température.

8. Procédé de fabrication d'un élastomère thermoplastique selon la revendication 7, caractérisé en ce que l'étirement initial est inférieur ou égal à 1000 % et de préférence compris entre 100 et 400 %.

9. Utilisation d'un élastomère thermoplastique tel que défini dans l'une quelconque des revendications 1 à 6 pour la réalisation d'objets moulés, extrudés et/ou injectés, de films de préférence dans le domaine de température où se produit la cryo-extensibilité.

Fig. 1

Fig. 2

**Office européen
des brevets**

**RAPPORT DE RECHERCHE
EUROPEENNE**

Numéro de la demande

**EP 90 40 1796**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | FR-A-2 273 021 (ATO CHEMIE)<br>* revendications *<br>— — — | 1-4,6,9 | C 08 G 69/44 |
| D,X | FR-A-2 401 947 (ATO CHEMIE)<br>* revendications *<br>— — — | 1-4,6,9 | |
| D,A | JOURNAL OF MACROMOLECULAR SCIENCE vol. B1, no. 1, mars 1967, pages 41-91; A. KELLER et al.: "Orientated Crystallization in Polymers"<br>* l'article en entier *<br>— — — | 1 | |
| A | EP-A-0 221 188 (ASAHI KASEI K.K.K.K.)<br>* revendications *<br>— — — | 2-6 | |
| A | FR-A-2 470 141 (ATO CHEMIE)<br>* revendications *<br>— — — — — | 2 | |

|  |
|---|
| **DOMAINES TECHNIQUES RECHERCHES (Int. Cl.5)** |
| C 08 G |

Le présent rapport de recherche a été établi pour toutes les revendications

| Lieu de la recherche | Date d'achèvement de la recherche | Examinateur |
|---|---|---|
| Berlin | 12 octobre 90 | BOEKER R.B. |